# FASCICULE DE BREVET EUROPEEN

(11) **EP 3 080 537 B1**
(45) Date de publication et mention de la délivrance du brevet: **13.11.2019**
(21) Numéro de dépôt: 14830811.7
(22) Date de dépôt: 09.12.2014
(51) Int. Cl.: F28C 3/06, F28F 9/22, F24F 5/00, F24F 12/00, F28D 5/00

(54) **PROCEDE DE PRODUCTION D'UN FLUX D'AIR**
VERFHAREN ZUR ERZEUGUNG EINES LUFTSTROMS
METHOD FOR PRODUCING A STREAM OF AIR

(30) Priorité: 11.12.2013 FR 1362386; 22.10.2014 FR 1460141
(43) Date de publication de la demande: 19.10.2016
(60) Demande divisionnaire: 19201479.3
(73) Titulaire: Starklab, 59310 Nomain (FR)
(72) Inventeur: ZEMMOURI, Jaouad, F-59310 Nomain (FR)
(74) Mandataire: Matkowska, Franck
(86) Numéro de dépôt international: PCT/FR2014/053225
(87) Numéro de publication internationale: WO 2015/086979

(56) Documents cités:
- EP-A2- 1 632 726
- DE-A1- 2 636 173
- JP-A- S54 122 460
- US-A- 1 503 428
- US-A- 4 380 910
- US-A1- 2004 134 212

## Description

### Domaine technique

La présente invention concerne la production d'un flux d'air à travers un volume de liquide. Elle trouve son application dans des domaines variés tels que par exemple, et de manière non exhaustive, la production d'un flux d'air qui est chauffé ou refroidi en traversant ledit volume de liquide, la production d'un flux d'air dont la température est contrôlée et/ou dont l'humidité absolue est contrôlée, l'humidification ou la déshumidification d'un flux d'air, la dépollution ou le filtrage d'un flux d'air, le chauffage ou la climatisation de serres, le chauffage ou la climatisation d'un local ou de bâtiments industriels, tertiaires, ou domestiques, le contrôle de l'hygrométrie d'un local ou de bâtiments industriels, tertiaires, ou domestiques. Le flux d'air produit peut également être utilisé pour refroidir, chauffer, humidifier ou déshumidifier tout type de surface.

### Art antérieur

L'utilisation de la conductivité thermique et de la chaleur latente d'un liquide, tel que par exemple de l'eau, pour chauffer ou refroidir un flux d'air par échange thermique entre le liquide et le flux d'air, avec une mise en contact direct du flux d'air et du liquide, est une technique ancienne, qui présente l'avantage d'être écologique, car elle évite notamment la mise en œuvre de fluides caloporteurs de type fluides frigorigènes. Le chauffage ou refroidissement du flux d'air peuvent par exemple avoir pour objectif de produire un flux d'air ayant une température contrôlée et/ou avoir pour objectif de produire un flux d'air ayant une humidité absolue contrôlée.

Une première solution connue pour mettre en œuvre cette technique consiste à faire passer le flux d'air à travers un rideau de fines gouttelettes du liquide ou à travers une surface d'échange perméable à l'air et contenant ce liquide, tel que par exemple un matériau textile imbibé d'eau. Le principal inconvénient de ce type de solution réside dans le très faible rendement énergétique de l'échange thermique entre le liquide et le flux d'air, et dans les faibles débits d'air pouvant être obtenus.

Une deuxième solution connue consiste à faire passer le flux d'air directement à travers un volume de liquide contenu dans une enceinte, en injectant le flux d'air dans le volume de liquide, au-dessous de la surface dudit volume de liquide. Ce type de solution est décrit par exemple dans la demande de brevet internationale WO 2006/138287 et dans les brevets américains US 4 697 735 (figure 3) et US 7 549 418. Cette deuxième solution technique présente l'avantage de permettre d'atteindre des rendements énergétiques de l'échange thermique entre le liquide et le flux d'air plus élevés.

Le document DE 26 36 173, qui est considéré comme l'état de la technique le plus proche, décrit un procédé de production d'un flux d'air au moyen d'un dispositif de production d'un flux d'air comportant une enceinte, qui contient un volume de liquide, et qui comporte au moins une ouverture d'évacuation d'air et plusieurs chicanes.

### Objectif de l'invention

Un objectif de l'invention est de proposer une nouvelle solution technique permettant d'améliorer la production d'un flux d'air à travers un volume de liquide contenu dans une enceinte.

### Résumé de l'invention

Selon un premier aspect, l'invention a ainsi pour objet un procédé de production d'un flux d'air tel que défini dans la revendication 1.

Lorsque le flux d'air traverse le volume de liquide, en fonction notamment de la manière dont l'air est introduit dans le volume de liquide, et en fonction du débit d'air et du volume de liquide, il se produit dans le volume de liquide des turbulences plus ou moins importantes susceptibles de provoquer des projections de gouttes qui sont entraînées par le flux d'air. Les chicanes du procédé de l'invention forment un obstacle sur le parcours de ces gouttes et permettent de réduire les risques que ces gouttes ne soient entrainées par le flux d'air jusqu'à l'ouverture d'évacuation. Il en résulte avantageusement que le débit du flux d'air peut être très important et/ou que le volume de l'enceinte peut être faible, ce qui réduit l'encombrement du dispositif, tout en évitant la projection de gouttes de liquide en dehors de l'enceinte du dispositif.

L'invention a également pour objet un procédé pour chauffer un local et/ou pour refroidir un local et/ou pour humidifier et/ou pour déshumidifier un local, et notamment une serre, tel que défini dans la revendication 12.

L'invention a également pour objet une utilisation du procédé de production d'un flux d'air susvisé pour chauffer un local ou pour refroidir un local, ou pour humidifier un local ou pour déshumidifier un local.

### Brève description des figures

Les caractéristiques et avantages de l'invention apparaîtront plus clairement à la lecture de la description détaillée ci-après de plusieurs variantes particulières de réalisation de l'invention, lesquelles variantes particulières de réalisation sont décrites à titre d'exemples non limitatifs et non exhaustifs de l'invention, et en référence aux dessins annexés sur lesquels :
- La figure 1 représente de manière schématique une variante de mise en œuvre d'un dispositif permettant conformément au procédé de l'invention la production d'un flux d'air à travers un volume de liquide.
- La figure 2 est une vue isométrique du dispositif de la figure 1, sans les moyens de renouvellement du liquide dans l'enceinte.
- La figure 3 représente de manière schématique une autre variante de mise en œuvre du dispositif de la figure 1.
- La figure 4 est une vue isométrique du dispositif de la figure 3, sans les moyens de renouvellement du liquide dans l'enceinte.
- La figure 5 représente de manière schématique une installation de chauffage d'un local.
- La figure 6 représente de manière schématique une installation de refroidissement d'un local.
- La figure 7 représente une installation permettant de réguler l'humidité d'un local.

### Description détaillée

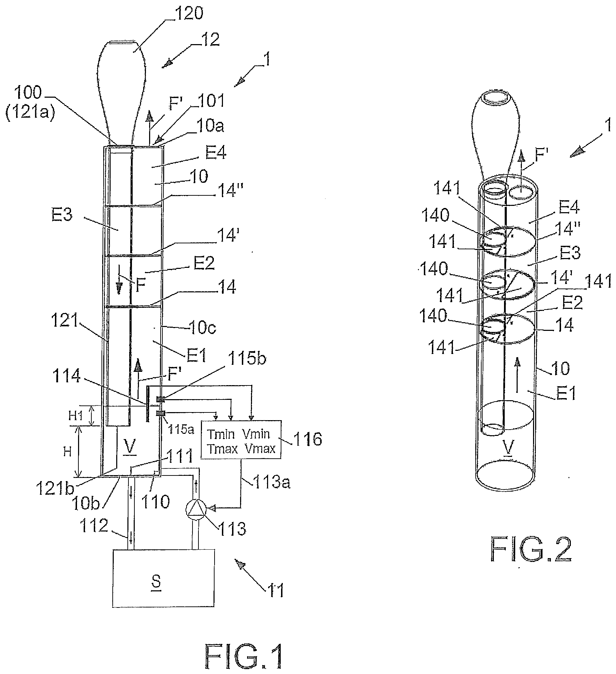

En référence à la variante particulière de réalisation des figures 1 à 4, le dispositif 1 de production d'un flux d'air comporte une enceinte fermée 10, qui comprend une paroi supérieure 10a, une paroi de fond 10b et une paroi latérale 10c reliant la paroi supérieure 10a à la paroi de fond 10b.

Dans cet exemple particulier, la paroi latérale 10c de l'enceinte 10 est de forme tubulaire, mais pourrait dans le cadre de l'invention avoir une toute autre forme.

L'enceinte 10 contient dans le fond un volume de liquide V, de hauteur H, dont la température est contrôlée. Ce liquide est de préférence de l'eau, mais dans le cadre de l'invention il est possible d'utiliser tout type de liquide.

L'enceinte 10 comporte également une ouverture d'admission d'air 100 et une ouverture d'évacuation d'air 101 positionnées en dehors du volume de liquide V. Dans cette variante des figures 1 à 4, mais de manière non limitative de l'invention, l'ouverture d'admission d'air 100 et l'ouverture d'évacuation d'air 101 sont réalisées dans la paroi supérieure 10a de l'enceinte 10.

Le dispositif 1 comporte des moyens de renouvellement 11 du liquide contenu dans l'enceinte. Ces moyens de renouvellement 11 ont pour fonction d'alimenter automatiquement l'enceinte 10 avec du liquide, de manière à maintenir dans l'enceinte 10 un volume de liquide V prédéfini, à une température prédéfinie.

Le dispositif 1 comporte également des moyens d'injection d'air 12, qui permettent de créer et d'introduire, dans le volume V de liquide contenu dans l'enceinte 10, un flux d'air F entrant en provenance de l'extérieur de l'enceinte 10. Dans la variante particulière illustrée sur les figures 1 à 4, ces moyens d'injection d'air 12 comportent plus particulièrement un compresseur d'air 120, par exemple de type ventilateur et un tube d'injection 121.

Le tube d'injection 121 est ouvert à ses deux extrémités supérieure 121a et inférieure 121b. L'extrémité ouverte supérieure 121a du tube 121 est raccordée à l'ouverture d'admission d'air 100 de l'enceinte 10. L'extrémité ouverte inférieure 121b du tube 121 forme une sortie d'air et est plongée dans le volume de liquide V, en étant positionnée à une profondeur H₁, qui correspond à la distance entre la surface du volume de liquide V et la sortie d'air 121b du tube 121.

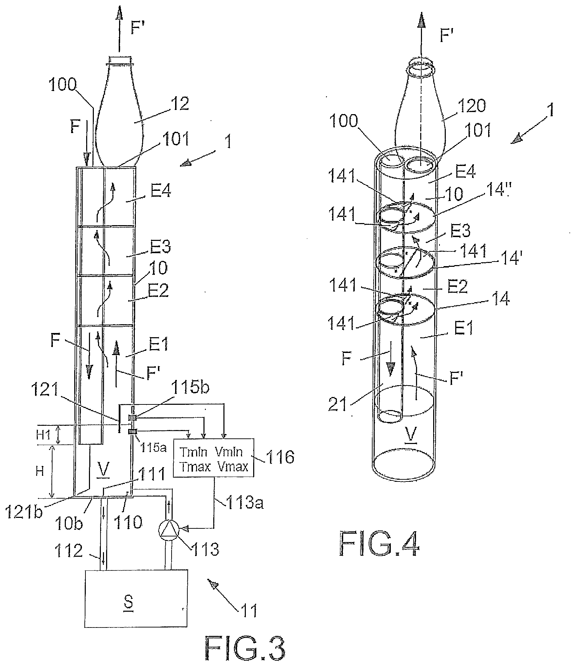

Dans cette variante de réalisation, en fonction du mode de fonctionnement du dispositif (par soufflage d'air/figures 1 et 2 ; par aspiration d'air/figures 3 et 4), le compresseur d'air 120 est raccordé à l'ouverture d'admission d'air 100 de l'enceinte 10 ou à l'ouverture d'évacuation d'air 101 de l'enceinte 10.

Le dispositif 1 comporte également plusieurs plaques 14, 14', 14" à fonction de chicanes, qui sont interposées entre le volume de liquide V et l'ouverture d'évacuation d'air 101 de l'enceinte 10. Ces plaques 14, 14', 14" sont fixées à l'intérieur de l'enceinte 10, l'une au dessus de l'autre, avec un espace entre plaques 14, de manière à former plusieurs chambres superposées E1, E2, E3 et E4. Chaque plaque 14, 14', 14" est en contact étanche sur toute sa périphérie avec la paroi latérale 10c de l'enceinte 10. La première chambre E1 est délimitée par la surface du volume de liquide V et la plaque inférieure 14. La deuxième chambre E2 est délimitée par la plaque inférieure 14 et la plaque intermédiaire 14'. La troisième chambre E3 est délimitée par la plaque intermédiaire 14' et la plaque supérieure 14". La troisième chambre E4 est délimitée par la plaque supérieure 14" et la paroi supérieure 10a de l'enceinte 10.

Le nombre de plaque 14, 14', 14" et de chambres E1, E2, E3 et E4 ne sont pas limitatifs de l'invention, le dispositif 1 pouvant comporter une seule plaque 14 délimitant deux chambres ou plus de trois plaques délimitant plus de quatre chambres.

Chaque plaque 14, 14, 14" comporte une ouverture traversante 140 ayant sensiblement la même section que le tube d'injection 121. Ces ouvertures traversantes 140 sont alignées verticalement, et le tube d'injection 121 est passé à travers ces ouvertures 140, le tube 121 étant en contact étanche sur toute sa périphérie extérieure avec chaque plaque 14, 14', 14" au niveau de chaque ouverture 140 de passage du tube.

Chaque plaque 14, 14', 14" comporte également au moins une ouverture traversante 141 permettant de faire communiquer entre elles deux chambres voisines, et permettant ainsi le passage d'un flux d'air F' sortant du volume de liquide V , et qui a par exemple été refroidi ou chauffé par le liquide, d'une chambre à l'autre depuis la chambre inférieure E1 jusqu'à l'ouverture d'évacuation 101.

Ces ouvertures 141 sont décalées verticalement les unes par rapport aux autres et ne sont pas alignées avec l'ouverture d'évacuation d'air 101 de l'enceinte 10, de manière à faire subir plusieurs changements de direction audit flux d'air F'.

Dans la variante particulière des figures 1 et 3, les moyens de renouvellement 11 du liquide dans l'enceinte 10 comportent :
- une ouverture d'admission du liquide 110 réalisée dans la paroi latérale 10 c de l'enceinte 10 à proximité de la paroi de fond 10b de l'enceinte 10 ;
- une ouverture d'évacuation du liquide 111 réalisée dans la paroi de fond 10b de l'enceinte ;
- une tubulure d'évacuation 112 du liquide qui est raccordée à une extrémité à l'ouverture d'évacuation 111 de l'enceinte 10, et qui dans cet exemple particulier est raccordée à son autre extrémité à une source de liquide S ;
- des moyens de pompage 113, de type pompe hydraulique, qui sont raccordés à la source de liquide S et à l'ouverture d'admission 110 de l'enceinte, et qui permettent de pomper du liquide dans la source de liquide S et de l'introduire dans l'enceinte 10 par l'ouverture d'admission 110, de manière à renouveler le liquide dans l'enceinte.

Dans le cadre de l'invention, la tubulure d'évacuation 112 du liquide n'est pas nécessairement raccordée à la source de liquide S.

Les moyens de renouvellement 11 du liquide dans l'enceinte 10 comportent par exemple :
- au moins un capteur de température 114 permettant de mesurer la température du volume de liquide V dans l'enceinte 10 ;
- au moins un capteur de niveau bas 115a et un capteur de niveau haut 115b permettant de mesurer le niveau H de liquide dans l'enceinte ;
- des moyens de traitement électroniques 116, par exemple de type automate programmable industriel ou carte électronique de contrôle/commande, qui sont reliés au capteur de température 114 et aux capteurs de niveau 115a et 115b, et qui délivrent en sortie un signal de commande 113a permettant de piloter les moyens de pompage 113.

Les moyens de traitement électroniques 116 sont conçus, et plus particulièrement sont par exemple programmés, pour commander les moyens de pompage 113 au moyen du signal de commande 113a, à partir des signaux de mesure délivrés par le capteur de température 114 et par les capteurs de niveau 115a et 115b, et en fonction de consignes de température minimum Tmin et maximum Tmax, et de consignes de volume (ou niveau) de liquide minimum Vmin et maximum Vmax, de manière à maintenir constamment dans l'enceinte 10 un volume de liquide V, compris entre ledit volume de consigne minimum (Vmin) et ledit volume de consigne maximum (Vmax), et maintenu à une température T_{liquide} qui est comprise entre ladite température de consigne minimum (Tmin) et ladite température de consigne maximum (Tmax).

Les figures 1 et 2 illustrent un premier mode de mise en œuvre et de fonctionnement du dispositif 1, dans lesquels le flux d'air F à l'entrée de l'enceinte 10 est créé en soufflant de l'air dans le tube 121.

Dans ce mode de mise en œuvre, l'ouverture d'évacuation d'air 101 de l'enceinte 10 est à l'air libre. La sortie du compresseur d'air 120 est raccordée à l'ouverture d'admission d'air 100 de l'enceinte 10, et l'admission du compresseur d'air 120 est à l'air libre. Lorsque le compresseur d'air 120 fonctionne, il aspire de l'air en provenance de l'extérieur de l'enceinte 1 et il pousse cet air dans le tube d'injection 121 à travers l'ouverture d'admission d'air 100, sous la forme d'un flux d'air F entrant, qui est à une température initiale T_{Initiale} correspondant sensiblement à la température de l'air ambiant à l'extérieur de l'enceinte 10, ou éventuellement à une température initiale T_{Initiale} qui peut être légèrement supérieure à la température de l'air ambiant à l'extérieur de l'enceinte 10 du fait du passage de l'air dans le compresseur 120.

Ce flux d'air F entrant à la température initiale T_{Initiale} est injecté, en sortie du tube 121, directement dans le volume de liquide V, au-dessous de la surface du volume de liquide, V, et passe à travers ce volume de liquide V qui est à une température T_{Liquide} (comprise entre Tmin et Tmax) différente de la température initiale T_{Initiale}. Au cours du passage de ce flux d'air dans le volume de liquide V, il se produit un échange thermique par contact direct entre l'air et le liquide, de telle sorte que de l'air (refroidi ou chauffé selon le cas) ressort du volume de liquide et qu'un flux d'air F' refroidi ou chauffé remonte dans l'enceinte 10 pour être évacué par l'ouverture d'évacuation 101. Ce flux d'air F' à la sortie de l'enceinte présente une température finale T_{Finale} proche, et de préférence sensiblement identique, à la température T_{Liquide} du volume de liquide V contenu dans l'enceinte.

Lorsque la température du liquide T_{Liquide} est inférieure à la température initiale T_{Initiale}, le flux d'air F' après passage de l'air dans le volume de liquide V a été refroidi. Il en résulte concomitamment que le flux d'air F' sortant du dispositif 1 a été déshumidifié par rapport aux flux d'air entrant F, l'humidité absolue (poids d'eau par volume d'air) dans le flux d'air F' sortant étant inférieure à l'humidité absolue du flux d'air F entrant. A l'inverse, lorsque la température du liquide T_{Liquide} est supérieure à la température initiale T_{Initiale}, le flux d'air F' après passage de l'air dans le volume de liquide V a été chauffé. Il en résulte concomitamment que le flux d'air F' sortant du dispositif 1 a été humidifié par rapport aux flux d'air entrant F, l'humidité absolue (poids d'eau par volume d'air) dans le flux d'air F' sortant étant supérieure à l'humidité absolue du flux d'air F entrant.

Le flux d'air F' refroidi ou chauffé à une température finale T_{Finale} proche, et de préférence sensiblement identique, à la température T_{Liquide} du volume de liquide V, remonte à l'intérieur de l'enceinte 10 en circulant à travers les chicanes 14,14',14", et en subissant plusieurs changements de directions successifs, puis est évacué en dehors de l'enceinte 10 à travers l'ouverture d'évacuation 101.

Les figures 3 et 4 illustrent un deuxième mode de mise en œuvre et de fonctionnement du dispositif 1, dans lesquels le flux d'air F à l'entrée de l'enceinte 10 est créé par aspiration.

Dans ce mode de mise en œuvre, l'ouverture d'admission d'air 100 de l'enceinte est à l'air libre. L'admission du compresseur d'air 120 est raccordée à l'ouverture d'évacuation d'air 101 de l'enceinte 10, et la sortie du compresseur d'air 120 est à l'air libre. Lorsque le compresseur d'air 120 fonctionne, un flux d'air F en provenance de l'extérieur de l'enceinte 1 est créé par aspiration dans le tube d'injection 121 à travers l'ouverture d'admission d'air 110. La température initiale T_{Initiale} de ce flux d'air F correspond à la température de l'air ambiant à l'extérieur de l'enceinte 10. Le flux d'air F', refroidi ou chauffé après passage de l'air dans le volume de liquide V, remonte dans l'enceinte en passant à travers les chicanes 14, 14', 14", puis passe à travers le compresseur 120 et est soufflé en dehors de l'enceinte 10 sous la forme d'un flux d'air refroidi ou chauffé à une température finale T_{Finale} proche, et de préférence sensiblement identique ou légèrement supérieure à la température T_{Liquide} du volume de liquide V.

Dans les deux modes de fonctionnent susvisés, le débit d'air entrant dans l'enceinte 10 est égal au débit d'air sortant de l'enceinte 10. Il se produit dans le volume de liquide V des turbulences qui peuvent être importantes, et qui sont susceptibles de provoquer des projections de gouttes de liquides, qui sont entraînées par le flux d'air F' chauffé ou refroidi. Les chicanes 14, 14', 14" du dispositif forment un obstacle sur le parcours de ces gouttes et permettent, grâce aux changements de direction successifs de l'air imposés par les chicanes, d'éviter que du liquide ne soit projeté par l'ouverture d'évacuation 101 en dehors de l'enceinte en même temps le flux d'air F' refroidi ou chauffé. Grâce aux chicanes 14, 14', 14','aucune goutte de liquide n'est projetée en dehors de l'enceinte. Il en résulte avantageusement que les débits des flux d'air F et F' peuvent être très importants et/ou que le volume de l'enceinte peut être faible, ce qui réduit l'encombrement du dispositif, tout en évitant la projection de gouttes de liquide en dehors de l'enceinte du dispositif.

Lors du fonctionnement du dispositif 1, les particules inertes et/ou vivantes, et notamment les poussières, dans l'air environnant du dispositif 1 sont avantageusement aspirées dans le dispositif 1 et sont filtrés en étant captées dans le volume V de liquide contenu dans l'enceinte 10, ce qui permet en sortie du dispositif 1 d'obtenir un air plus propre. Typiquement, toutes les particules supérieures à 2µm peuvent être filtrées par le dispositif 1.

Dans une autre variante de réalisation, le dispositif peut être utilisé pour filtrer ou dépolluer le flux d'air entrant F par passage à travers un volume de liquide. Dans cette application, la température du volume de liquide peut être supérieure ou inférieure à la température du flux d'air entrant F, ou être sensiblement égale à la température du flux d'air entrant F. Lorsque la température du volume de liquide est sensiblement égale à la température du flux d'air entrant F, on produit en sortie du dispositif 1 un flux d'air sortant F' filtré ou dépollué, qui n'a pas été chauffé ou refroidi, mais qui est sensiblement à la même température que le flux d'air entrant F.

Dans une autre variante de réalisation, les moyens 11 de renouvellement de liquide peuvent être remplacés par des moyens de chauffage ou refroidissement du volume de liquide V, qui permettent de maintenir la température du volume de liquide sans nécessairement réaliser un renouvellement du liquide dans l'enceinte.

L'invention permet avantageusement de travailler avec un débit d'air en sortie du compresseur 120 qui est important et supérieur à 100m³/h. Dans une réalisation particulière, le volume de l'enceinte 10 était de l'ordre de 5 litres. Le volume de liquide V dans l'enceinte 10 était inférieur à 3 litres. L'invention n'est toutefois pas limitée à ces valeurs particulières de volumes.

Plus particulièrement, dans le cadre de l'invention l'invention le ratio entre le débit d'air entrant dans l'enceinte et le volume V de liquide présent dans l'enceinte 10 peut avantageusement être 10⁴ h⁻¹ L'invention permet ainsi une faible consommation de liquide et permet avantageusement de maintenir à la température requise un faible volume de liquide dans l'enceinte 10, ce qui requiert moins d'énergie comparativement à un volume qui serait plus important.

Lors du fonctionnement, du fait des échanges thermiques entre l'air et le liquide, le liquide se refroidit (si T_{Liquide} > T_{Initiale}) ou se réchauffe (si T_{Liquide} <T_{Initiale}). Les moyens de renouvellement de liquide 11 permettent de renouveler le liquide dans l'enceinte avec du liquide nouveau à la température requise de manière dans l'enceinte 10 un volume de liquide V prédéfini, sensiblement à la température prédéfinie T_{Liquide}.

La profondeur H1 de la sortie d'air du tube d'injection 121 doit être suffisamment importante pour que le traitement du flux d'air par passage à travers le volume de liquide V, et en plus particulièrement pour que le cas échéant le transfert thermique entre le liquide et l'air injecté dans le volume de liquide V, soit efficace et suffisant, et permette le cas échéant au flux d'air F' refroidi ou chauffé par le liquide d'être à une température proche et de préférence sensiblement identique à celle du liquide. A l'inverse, cette profondeur H1 ne doit pas être trop importante pour éviter un surdimensionnement du compresseur d'air 121. La profondeur H1 est ainsi de préférence comprise entre 20mm et 80mm. De même pour une meilleure efficacité, la hauteur (H + H1) du volume de liquide V doit de préférence ne pas être trop importante, et sera préférentiellement inférieure à 200mm, et plus particulièrement de l'ordre de 100mm. L'invention n'est toutefois fois pas limitée à ces valeurs particulières.

Le compresseur 120 peut être tout type connu de compresseur d'air permettant de créer un flux d'air (ventilateur centrifuge, ventilateur axial, pompe, ...).

Néanmoins, le compresseur d'air 120 est de préférence un compresseur d'air centrifuge, car ce type de compresseur permet avantageusement d'obtenir des débits d'air importants, et également d'obtenir une différence importante de température ΔT de l'air entre la sortie du compresseur 120 et l'admission du compresseur, comparativement par exemple à un compresseur axial. En pratique, cette différence de température ΔT pour un compresseur d'air centrifuge est d'au moins 2°C et peut atteindre 4°C, l'air en sortie du compresseur étant à une température supérieure à la température de l'air à l'entrée du compresseur.

De préférence, le mode de fonctionnement des figures 1 et 2 peut être utilisé en été pour réaliser une climatisation ou une déshumidification d'un local, en produisant un ou plusieurs flux d'air F' refroidis au moyen d'un ou plusieurs dispositifs 1, à partir de l'air chaud prélevé à l'extérieur du local. La source de liquide S peut avantageusement être une nappe phréatique ou une citerne d'eau froide enterrée en profondeur ou refroidie par tout système de refroidissement connu.

A l'inverse, le mode de fonctionnement des figures 3 et 4 est de préférence utilisé en hiver pour chauffer ou humidifier un local, en produisant un ou plusieurs flux d'air F' chauffés au moyen d'un ou plusieurs dispositifs 1, à partir de l'air froid prélevé à l'extérieur du local. La source de liquide S est dans ce cas une source d'eau chaude, telle que par exemple une citerne d'eau chauffée, un bassin d'eau extérieur chauffé, par exemple par énergie solaire, une nappe phréatique ou une citerne d'eau chaude. Dans ce cas, la mise en œuvre d'un compresseur à air 120 de type centrifuge permet avantageusement d'utiliser le différentiel de température ΔT pour augmenter la température de l'air en sorte du compresseur 120 par rapport à la température de l'air au niveau de l'ouverture d'évacuation 101 de l'enceinte 10, ce qui améliore le rendement énergétique.

Dans les deux modes de fonctionnement, l'invention s'applique à tout type de local. Le local peut être de type industriel, domestique ou tertiaire. Le local peut également être une serre ou un hangar. Dans les deux modes de fonctionnement, l'invention permet avantageusement un renouvellement continuel de l'air à l'intérieur du local.

Le dispositif 1 peut également produire un flux d'air chaud ou refroidi et/ou humidifié ou déshumidifié dirigé sur tout type de surface pour chauffer ou refroidir et/ou humidifier ou sécher cette surface.

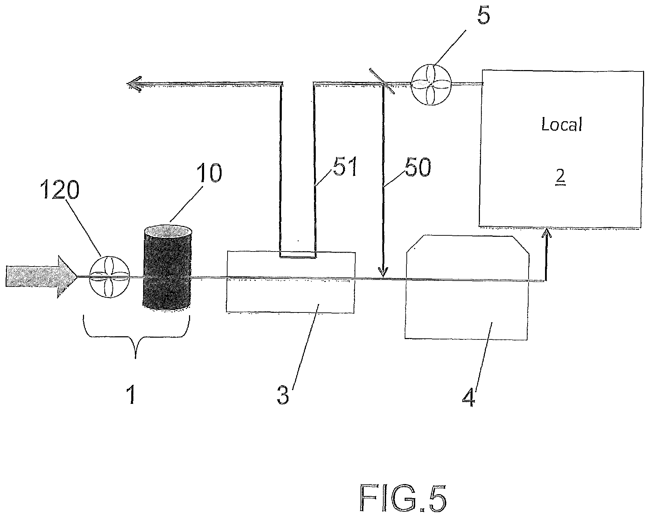

On a représenté de manière schématique sur la figure 5 une installation de chauffage et/ou d'humidification d'un local 2. Cette installation comporte un ou plusieurs dispositifs 1 de production d'un flux d'air chauffé, du type par exemple du dispositif de la figure 1 fonctionnant par soufflage. Dans une autre variante, il est néanmoins également possible de mettre en œuvre des dispositifs 1 de la figure 4 fonctionnant par aspiration. Le nombre de dispositifs 1 de production d'un flux d'air chauffé dépendra notamment des débits d'air des dispositifs 1 et du volume du local 2. Les dispositifs 1 seront judicieusement répartis dans le volume du local 2.

Chaque dispositif 1 est agencé dans le local 2 de telle sorte que l'air qui est introduit dans l'enceinte 10 du dispositif 1 est de l'air froid provenant de l'extérieur du local. L'enceinte 10 de chaque dispositif 1 est en outre raccordée en sortie à un échangeur thermique 3, de telle sorte l'air chauffé sortant du dispositif 1 traverse ledit échangeur thermique 3, puis est introduit en sortie dans un dispositif de chauffage d'air, par exemple comprenant des résistances électriques chauffantes ou des échangeurs à plaques. L'air préchauffé par le dispositif de chauffage d'air 4 est ensuite introduit à l'intérieur du local 2.

L'installation comporte également des moyens de recyclage 5 permettant de renouveler l'air dans le local en l'aspirant et en le refoulant à l'extérieur du local 2, de manière à maintenir la température de l'air dans le local à une température de consigne prédéfinie. Une partie de cet air chaud provenant du local 2 (figure 5/ branche 50) est recyclée en étant réintroduite à l'intérieur du local 2 en aval de l'échangeur thermique 3. Une autre partie de cet air chaud provenant du local 2 (figure 5/branche 51) est envoyée dans l'échangeur thermique 3, et traverse ledit échangeur thermique 3, de telle sorte que l'air provenant du dispositif 1 est chauffé par cet air chaud provenant du local 2. Dans cette installation, la température du liquide dans l'enceinte 10 de chaque dispositif 1 est inférieure à la température de l'air chaud provenant du local 2.

L'échangeur thermique 3 peut être tout type connu d'échangeur thermique permettant un échange thermique entre deux fluides, en particulier sans mise en contact directe des deux fluides.

La mise en œuvre de cet échangeur thermique 3 permet avantageusement un chauffage de l'air en sortie des dispositifs 1 avec de l'air chaud en provenance du local, et de ce fait permet de réutiliser une partie des calories de cet air chaud et de fonctionner avec une température de liquide dans les dispositifs 1 qui est plus basse. On réduit ainsi la consommation d'énergie.

A titre d'exemple non limitatif, dans une variante particulière de mise en œuvre, la température de l'air introduit dans l'enceinte 10 était inférieure à 15°C, et par exemple inférieure à 0°C, et le taux d'humidité relative de cet air était par exemple d'environ 90%-100%. La température du liquide dans l'enceinte 10 était maintenue à environ 15°C. La température de l'air en sortie de chaque dispositif 1 était ainsi d'environ 15°C. La température de l'air en sortie du dispositif de chauffage d'air 4 et à l'entrée du local 2 était d'environ 22°C. La température du local 2 était maintenue aux environ de 19°C avec un taux d'humidité relative de cet air par exemple d'environ 60%.

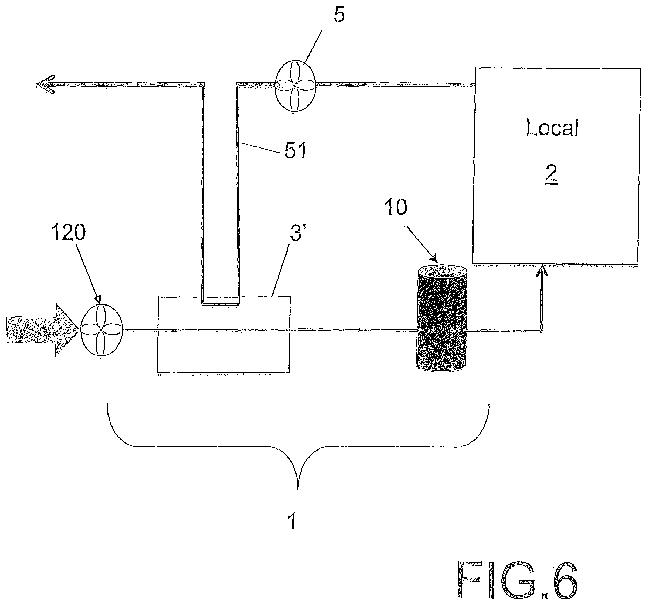

On a représenté de manière schématique sur la figure 6 une installation de refroidissement (climatisation) et/ou déshumidification d'un local 2. Cette installation comporte un ou plusieurs dispositifs 1 de production d'un flux d'air refroidi, du type par exemple du dispositif de la figure 1 fonctionnant par soufflage. Dans une autre variante, il est néanmoins également possible de mettre en œuvre des dispositifs 1 du type de la figure 4 fonctionnant par aspiration. Le nombre de dispositifs 1 de production d'un flux d'air refroidi dépendra notamment des débits d'air des dispositifs 1 et du volume du local 2. Les dispositifs 1 seront judicieusement répartis dans le volume du local 2.

Chaque dispositif 1 est agencé dans le local 2 de telle sorte que l'air qui est introduit dans l'enceinte 10 du dispositif 1 est de l'air chaud provenant de l'extérieur du local. L'installation comporte en outre un échangeur thermique 3' qui est interposé entre le compresseur d'air 120 de chaque dispositif et l'enceinte 10 de chaque dispositif 1, de telle sorte l'air chaud en provenance de l'extérieur du local 2 traverse ledit échangeur thermique 3', puis est introduit dans l'enceinte 10 de chaque dispositif 1.

L'installation comporte également des moyens de recyclage d'air 5 permettant de renouveler l'air dans le local en l'aspirant et en le refoulant à l'extérieur du local 2, de manière à maintenir la température de l'air dans le local à une température de consigne prédéfinie. Cet air froid recyclé provenant du local 2 (figure 6/ branche 51) est envoyé dans l'échangeur thermique 3', et traverse ledit échangeur thermique 3, de telle sorte que l'air chaud provenant de l'extérieur, avant son introduction dans l'enceinte 10 de chaque dispositif 1, est refroidi par cet air froid recyclé provenant du local 2. Dans cette installation, la température du liquide dans l'enceinte 10 de chaque dispositif 1 est inférieure à la température de l'air froid provenant du local 2.

L'échangeur thermique 3' peut être tout type connu d'échangeur thermique permettant un échange thermique entre deux fluides, en particulier sans mise en contact directe des deux fluides.

La mise en œuvre de cet échangeur thermique 3' permet avantageusement un pré-refroidissement de l'air avant son introduction dans l'enceinte 10 de chaque dispositif 1 avec de l'air en provenance du local 2, et de ce fait permet de réutiliser une partie des calories de cet air. On réduit ainsi la consommation d'énergie.

A titre d'exemple non limitatif, dans une variante particulière de mise en œuvre, la température de l'air extérieur introduit dans l'échangeur 3' par le compresseur d'air 120 était supérieure 15°C, et par exemple de l'ordre de 32°C, et le taux d'humidité relative de cet air était par exemple d'environ 40%. La température du liquide dans l'enceinte 10 était maintenue à environ 15°C. La température de l'air en sortie de chaque dispositif 1 était ainsi d'environ 15°C. La température du local 2 était maintenue aux environ de 22°C.

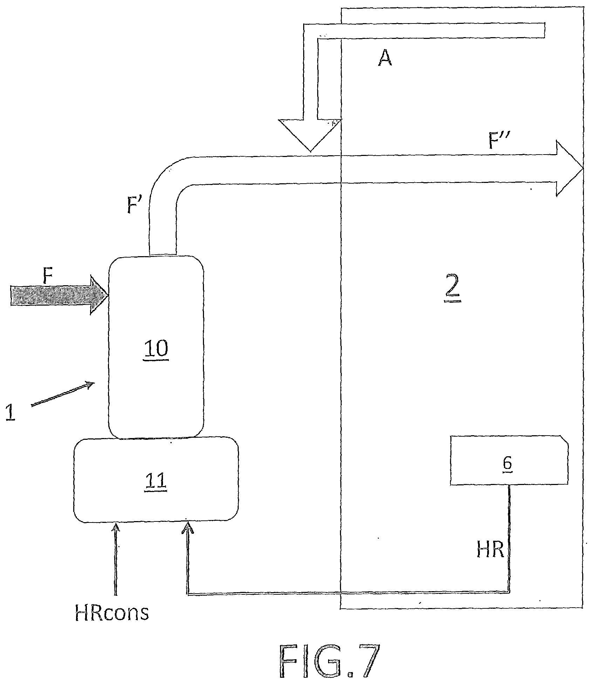

En référence à la figure 7, le dispositif 1 peut également être utilisé dans une installation permettant de contrôler et de maintenir automatiquement l'humidité relative dans un local 2 ou équivalent. Le flux d'air entrant F est capté par le dispositif 1 à l'extérieur du local 2, passe dans le dispositif 1, afin d'être selon le cas humidifié ou déshumidifié, et le flux d'air sortant F' humidifié ou déshumidifié est introduit dans le local 2, éventuellement après avoir été mélangé avec de l'air ambiant A capté dans le local 2 (figure 7/ Flux d'air F").

L'humidité relative HR dans le local est mesurée au moyen d'au moins un capteur d'humidité 6 de type hygrostat, qui est positionné dans le local en dehors du flux d'air entrant F' ou F". Le dispositif 1 est équipé de moyens 11 de contrôle de la température du volume de liquide V dans le dispositif 1, qui permettent automatiquement d'ajuster la température du volume de liquide V dans le dispositif 1 en fonction de l'humidité relative (HR) mesurée par le capteur humidité 6 dans le local 2 et d'une consigne d'humidité (HR_{cons}). Le flux air F' sortant du dispositif 1 est introduit dans le local 2, éventuellement en étant mélangé avec de l'air A provenant de l'intérieur du local 2.

Les moyens de contrôle de la température du volume de liquide V sont conçus de telle sorte que la température du volume de liquide V est automatiquement portée à une valeur supérieure à la température du flux d'air F entrant dans le dispositif 1, lorsque l'humidité relative HR mesurée par le capteur 6 est inférieure à la consigne d'humidité (HR_{cons}) ; on produit ainsi un flux d'air F' plus humide, dont l'humidité absolue (poids d'eau par volume d'air) est supérieure à l'humidité absolue du flux d'air F entrant dans le dispositif 1, et dont la température est environ à la température du volume de liquide V et est supérieure à la température du flux d'air F entrant dans le dispositif 1. Le flux d'air entrant F' permet ainsi d'humidifier le local 2.

Les moyens de contrôle de la température du volume de liquide V sont en outre conçus de telle sorte que la température du volume de liquide V est automatiquement portée à une valeur inférieure à la température du flux d'air F entrant dans le dispositif 1, lorsque l'humidité relative HR mesurée par le capteur 6 est supérieure à la consigne d'humidité (HR_{cons}) ; on produit ainsi un flux d'air F' moins humide dont l'humidité absolue (poids d'eau par volume d'air) est inférieure à l'humidité absolue du flux d'air F entrant dans le dispositif 1, et dont la température est environ à la température du volume de liquide V et est inférieure à la température du flux d'air F entrant dans le dispositif 1.

En variante, il est également possible que le flux d'air entrant F soit en tout ou partie capté par le dispositif 1 à l'intérieur du local 2.

En variante, il est également possible de chauffer ou refroidir par tout moyen de chauffage ou de refroidissement le flux d'air (F' ou F") entrant dans le local 2 sans modifier son humidité absolue de manière à le porter à une température prédéfinie.

Il est également possible de remplacer le capteur 6 de la figure 7 par un capteur 6 positionné dans le flux d'air (F' ou F") entrant dans le local 2 et mesurant l'humidité absolue dudit flux d'air. Dans ce cas on introduit dans le local 2 un flux d'air (F' ou F") dont l'humidité absolue est automatiquement contrôlée par rapport une consigne d'humidité en ajustant automatiquement la température du volume de liquide contenu dans le dispositif 1.

## Revendications

1. Procédé de production d'un flux d'air (F') au moyen d'un dispositif (1) de production d'un flux d'air comportant une enceinte (10), qui contient un volume de liquide (V), et qui comporte au moins une ouverture d'évacuation d'air (101) et une ou plusieurs chicanes (14 ; 14' ; 14") qui sont interposées entre le volume de liquide (V) et ladite ouverture d'évacuation (101), des moyens d'injection d'air (12) qui permettent de créer et de faire passer un flux d'air (F) entrant en provenance de l'extérieur de l'enceinte dans le volume de liquide (V) contenu dans l'enceinte, procédé dans lequel on introduit ledit flux d'air (F) entrant avec un débit d'air d'au moins 100m³/h dans ledit volume de liquide (V) au-dessous de la surface dudit volume de liquide (V), de telle sorte que ce flux d'air entrant est traité par contact direct avec le volume de liquide et sort de ce volume de liquide sous la forme d'un flux d'air sortant (F'), on fait circuler tout le flux d'air (F') sortant du volume de liquide (V) jusqu'à l'ouverture d'évacuation (101), en lui faisant subir au moyen de la ou des chicanes (14 ; 14' ; 14") un ou plusieurs changements de direction, de manière à empêcher la projection de liquide par l'ouverture d'évacuation d'air (101), et on évacue le flux d'air (F') sortant en dehors de ladite enceinte en le passant à travers l'ouverture d'évacuation d'air (101) de l'enceinte.

2. Procédé selon la revendication 1, dans lequel on utilise des moyens (11) de contrôle de température pour maintenir automatiquement la température dudit volume de liquide (V) dans l'enceinte (10) à une température prédéfinie (liquide).

3. Procédé selon la revendication 2, dans lequel on utilise les moyens (11) de contrôle de température pour effectuer un renouvellement du liquide dans l'enceinte (10), de manière à maintenir automatiquement dans l'enceinte (10) un volume de liquide (V) prédéfini à une température prédéfinie (T_{liquide}).

4. Procédé selon l'une quelconque des revendications précédentes, dans lequel les moyens d'injection d'air (12) comportent un tube (121) qui est positionné à l'intérieur de l'enceinte (10), qui est raccordé à l'ouverture d'admission d'air (100), et qui comporte une sortie d'air (121b) plongée dans le volume de liquide et dans lequel chaque chicane (14, 14', 14") comporte une ouverture traversante (140) pour le passage du tube (121), et le tube (121) est passé à travers ladite ouverture traversante (140) de chaque chicane (14, 14', 14"), en étant en contact étanche sur toute sa périphérie extérieure avec la chicane au niveau de chaque ouverture traversante.

5. Procédé selon l'une quelconque des revendications précédentes, dans lequel on utilise les moyens d'injection d'air (12) pour introduire le flux d'air (F) entrant dans le volume de liquide à une profondeur (H1) comprise entre 20mm et 80mm.

6. Procédé selon l'une quelconque des revendications précédentes, dans lequel les moyens d'injection d'air (12) comportent un compresseur d'air (120), qui est à l'extérieur de l'enceinte (10), et dont la sortie peut être raccordée ou est raccordée à l'ouverture d'admission d'air (100) de l'enceinte (10), ou un compresseur d'air (120), qui est à l'extérieur de l'enceinte (10), et dont l'admission peut être raccordée ou est raccordée à l'ouverture d'évacuation d'air (101) de l'enceinte (10).

7. Procédé selon la revendication 6, dans lequel on utilise le compresseur d'air (120) pour chauffer l'air passant à travers le compresseur d'air avec un gradient de température ΔT d'au moins 2°C.

8. Procédé selon l'une quelconque des revendications précédentes, dans lequel on utilise des moyens (11) de contrôle de la température du volume de liquide (V), pour ajuster la température du volume de liquide contenu dans l'enceinte (10) en fonction au moins d'une consigne d'hygrométrie prédéfinie (HR_{cons}) de manière à régler automatiquement l'humidité absolue dudit flux d'air (F') sortant de l'enceinte (10).

9. Procédé selon la revendication 8 dans lequel on utilise au moins un capteur d'humidité (6) et les moyens (11) de contrôle de la température du volume de liquide (V) pour ajuster la température du volume de liquide contenu dans l'enceinte (10) en fonction de l'humidité mesurée par le capteur d'humidité (6) et au moins d'une consigne d'hygrométrie prédéfinie (HR_{cons}).

10. Procédé selon l'une quelconque des revendications précédentes, dans lequel le volume de liquide contenu dans l'enceinte (10) du dispositif (1) est un volume d'eau.

11. Procédé selon la revendication 10, dans lequel le flux d'air (F) en provenance de l'extérieur de l'enceinte (10) et entrant dans l'enceinte (10) comporte des particules et/ou polluants, et au cours duquel une partie au moins de ces particules et/ou polluants est captée dans le liquide contenu dans l'enceinte (10).

12. Procédé de chauffage et/ou de refroidissement et/ou d'humification et/ou de déshumidification d'un local (2), dans lequel on met en œuvre le procédé de production d'un flux d'air (F') de l'une quelconque des revendications 1 à 10, de telle sorte que l'air qui est introduit dans l'enceinte (10) du dispositif (1) est de l'air provenant de l'extérieur du local (2).

13. Procédé de chauffage ou l'humidification d'un local (2) selon la revendication 12, dans lequel on utilise en outre un échangeur thermique (3) raccordé à l'enceinte (10) du dispositif (1), de telle sorte que l'air chauffé provenant de l'enceinte (10) traverse ledit échangeur thermique (3), avant d'être introduit à l'intérieur du local (2), et dans lequel on utilise des moyens (5) de recyclage d'air pour alimenter l'échangeur thermique (3) avec de l'air recyclé en provenance de l'intérieur local (2), de telle sorte que l'air en provenance du dispositif (1) et traversant l'échangeur thermique (3) est chauffé par ledit air recyclé en provenance de l'intérieur du local (2).

14. Procédé selon la revendication 13, dans lequel on utilise en outre un dispositif de chauffage d'air (4) interposé entre l'échangeur thermique (3) et l'intérieur du local (2), pour préchauffer l'air en provenance du dispositif (1) et traversant l'échangeur thermique (3) avant son introduction dans le local (2).

15. Procédé de refroidissement ou de déshumidification d'un local (2), selon la revendication 12, dans lequel on utilise en outre un échangeur thermique (3') raccordé à l'enceinte (10) du dispositif (1), et dans lequel on utilise des moyens (5) de recyclage d'air pour alimenter l'échangeur thermique (3') avec de l'air recyclé en provenance de l'intérieur du local (2), de telle sorte que l'air introduit dans l'enceinte (10) du dispositif (1) est préalablement refroidi, en traversant l'échangeur thermique (3'), par ledit air recyclé en provenance de l'intérieur du local (2).

16. Utilisation du procédé de l'une quelconque des revendications 1 à 10, pour chauffer un local ou pour refroidir un local ou pour humidifier un local ou pour déshumidifier un local, et plus particulièrement un local qui est une serre.

## Patentansprüche

1. Verfahren zur Erzeugung eines Luftstroms (F') mittels einer Vorrichtung (1) zur Erzeugung eines Luftstroms mit einem Gehäuse (10), welches ein Flüssigkeitsvolumen (V) enthält und das mindestens eine Luftauslassöffnung (101) und eine oder mehrere Leitflächen (14; 14'; 14"), die zwischen dem Flüssigkeitsvolumen (V) und der Auslassöffnung (101) angeordnet sind, und Lufteinlassmittel (12) aufweist, die es ermöglichen, einen Luftstrom (F) zu erzeugen und zu leiten, der von außerhalb des Gehäuses in das in dem Gehäuse enthaltene Flüssigkeitsvolumen (V) eintritt, wobei der Luftstrom (F), der mit einer Luftvolumenrate von mindestens 100 m³/h unterhalb der Oberfläche des Flüssigkeitsvolumens (V) in das Flüssigkeitsvolumen (V) eintritt, in der Weise eingeführt wird, dass dieser zufließende Luftstrom durch direkten Kontakt mit dem Flüssigkeitsvolumen behandelt wird und das Flüssigkeitsvolumen als Abluftstrom (F') verlässt, der gesamte aus dem Flüssigkeitsvolumen (V) austretende Abluftstrom (F') zur Austrittsöffnung (101) geführt wird, wobei er aufgrund des oder der Leitflächen (14; 14'; 14") eine oder mehrere Richtungsänderungen erfährt, um den Austritt von Flüssigkeit durch die Auslassöffnung (101) zu verhindern, und der Abluftstrom (F') nach außerhalb des Gehäuses geleitet wird, indem er die Auslassöffnung (101) des Gehäuses durchströmt.

2. Verfahren nach Anspruch 1, wobei eine Temperatursteuereinrichtung (11) verwendet wird, um die Temperatur des Flüssigkeitsvolumens (V) in dem Gehäuse (10) automatisch auf einer vorgegebenen Temperatur (T_{Flüssigkeit}) zu halten.

3. Verfahren nach Anspruch 2, wobei die Temperatursteuereinrichtung (11) dazu genutzt wird, eine Erneuerung der Flüssigkeit in dem Gehäuse (10) durchzuführen, um in dem Gehäuse (10) automatisch ein vorgegebenes Volumen an Flüssigkeit (V) auf einer vorgegebenen Temperatur (T_{Flüssigkeit}) bereitzuhalten.

4. Verfahren nach einem der vorhergehenden Ansprüche, wobei die Lufteinlassmittel (12) ein Rohr (121) umfassen, das innerhalb des Gehäuses (10) positioniert ist, das mit einer Lufteinlassöffnung (100) verbunden ist und das einen Luftauslass (121b) umfasst, der in das Flüssigkeitsvolumen eingetaucht ist und in dem jede Leitfläche (14, 14', 14") eine Durchgangsöffnung (140) für die Durchführung des Rohres (121) aufweist, und das Rohr (121) derart durch die Durchgangsöffnung (140) jeder Leitfläche (14, 14', 14") geführt wird, das es an jeder Durchgangsöffnung an seinem gesamten Außenumfang in abgedichtetem Kontakt mit der Leitfläche steht.

5. Verfahren nach einem der vorhergehenden Ansprüche, bei dem die Lufteinlassmittel (12) verwendet werden, um den Luftstrom (F) in einer Tiefe (H1) zwischen 20 mm und 80 mm in das Flüssigkeitsvolumen einzubringen.

6. Verfahren nach einem der vorhergehenden Ansprüche, wobei die Lufteinlassmittel (12) einen Luftverdichter (120) umfassen, der sich außerhalb des Gehäuses (10) befindet und dessen Ausgang mit der Lufteinlassöffnung (100) des Gehäuses (10) verbunden werden kann oder ist, oder einen Luftverdichter (120), der sich außerhalb des Gehäuses (10) befindet und dessen Einlass an die Luftauslassöffnung (101) des Gehäuses (10) angeschlossen ist oder an diese angeschlossen werden kann.

7. Verfahren nach Anspruch 6, wobei der Luftverdichter (120) verwendet wird, um die durch den Luftverdichter strömende Luft mit einem Temperaturgradienten ΔT von mindestens 2°C zu erwärmen.

8. Verfahren nach einem der vorstehenden Ansprüche, bei dem Mittel (11) zum Steuern der Temperatur des Flüssigkeitsvolumens (V) verwendet werden, um die Temperatur des in dem Gehäuse (10) enthaltenen Flüssigkeitsvolumens auf mindestens einen vorgegebenen Feuchtigkeitssollwert (HR_{cons}) einzustellen, um die absolute Luftfeuchtigkeit des aus dem Gehäuse (10) austretenden Luftstroms (F') automatisch einzustellen.

9. Verfahren nach Anspruch 8, wobei mindestens ein Feuchtesensor (6) und die Mittel (11) zum Steuern der Temperatur des Flüssigkeitsvolumens (V) verwendet werden, um die Temperatur des im Gehäuse (10) enthaltenen Flüssigkeitsvolumens in Abhängigkeit von der vom Feuchtesensor (6) gemessenen Feuchtigkeit und mindestens einer vorgegebenen Feuchtigkeitsreferenz (HR_{cons}) einzustellen.

10. Verfahren nach einem der vorstehenden Ansprüche, bei dem das im Gehäuse (10) der Vorrichtung (1) enthaltene Flüssigkeitsvolumen ein Volumen von Wasser ist.

11. Verfahren nach Anspruch 10, bei dem der Luftstrom (F) von außerhalb des Gehäuses (10) in das Gehäuse (10) Partikel und/oder Schadstoffe enthält und bei dem mindestens ein Teil dieser Partikel und/oder Schadstoffe von der im Gehäuse (10) enthaltenen Flüssigkeit aufgenommen wird.

12. Verfahren zum Erwärmen und/oder Kühlen und/oder Befeuchten und/oder Entfeuchten und/oder Entfeuchten eines Raumes (2), bei dem das Verfahren zum Erzeugen eines Luftstroms (F') nach einem der Ansprüche 1 bis 10 durchgeführt wird, so dass die Luft, die in das Gehäuse (10) der Vorrichtung (1) eingeleitet wird, Luft von außerhalb des Raumes (2) ist.

13. Verfahren zum Erwärmen oder Befeuchten eines Raumes (2) nach Anspruch 12, bei dem zusätzlich ein Wärmetauscher (3) verwendet wird, der mit dem Gehäuse (10) der Vorrichtung (1) derart verbunden ist, dass die erwärmte Luft aus dem Gehäuse (10) durch den Wärmetauscher (3) strömt, bevor sie in den Raum (2) eingebracht wird, und wobei Umluftmittel (5) verwendet werden, um den Wärmetauscher (3) mit Umluft aus dem Inneren des Raums (2) zu versorgen, so dass die Luft aus der Vorrichtung (1) und durch den Wärmetauscher (3) hindurch durch die Umluft aus dem Innenraum des Raumes (2) erwärmt wird.

14. Verfahren nach Anspruch 13, bei dem zusätzlich zwischen dem Wärmetauscher (3) und dem Innenraum (2) ein Lufterhitzer (4) verwendet wird, um die Luft aus der Vorrichtung (1) vorzuwärmen und durch den Wärmetauscher (3) vor seiner Einführung in den Raum (2) zu leiten.

15. Verfahren zum Kühlen oder Entfeuchten eines Raumes (2) nach Anspruch 12, bei dem zusätzlich ein Wärmetauscher (3') verwendet wird, der mit dem Gehäuse (10) der Vorrichtung (1) verbunden ist, und bei dem Umluftmittel (5) verwendet werden, um den Wärmetauscher (3') mit Umluft aus dem Raum (2) zu versorgen, so dass die in das Gehäuse (10) der Vorrichtung (1) eingeleitete Luft zuvor durch den Wärmetauscher (3') durch die aus dem Raum (2) kommende Umluft gekühlt wird.

16. Verwendung des Verfahrens nach einem der Ansprüche 1 bis 10 zum Heizen eines Raumes oder zum Kühlen eines Raumes oder zum Befeuchten eines Raumes oder zum Entfeuchten eines Raumes, insbesondere eines Raumes, der ein Treibhaus ist.

## Claims

1. Method for producing an airflow (F') by means of a device (1) for producing an airflow comprising: an enclosure (10) which contains a volume of liquid (V) and which comprises at least one air discharge opening (101) and one or more baffles (14; 14'; 14") interposed between the volume of liquid (V) and said discharge opening (101); and air injection means (12) for creating and passing an airflow (F) entering from outside the enclosure into the volume of liquid (V) contained in the enclosure, in which method said entering airflow (F) is introduced at an airflow rate of at least 100 m³/h into said volume of liquid (V) below the surface of said volume of liquid (V), such that this entering airflow is treated by direct contact with the volume of liquid and exits this volume of liquid in the form of an exiting airflow (F'), and all the airflow (F') exiting the volume of liquid (V) is circulated to the discharge opening (101) whilst being subjected, by means of the baffle(s) (14; 14'; 14"), to one or more changes of direction, so as to prevent the spraying of liquid through the air discharge opening (101), and the airflow (F') exiting said enclosure is discharged by being passed through the air discharge opening (101) of the enclosure.

2. Method according to claim 1, wherein temperature control means (11) are used to automatically maintain the temperature of said volume of liquid (V) in the enclosure (10) at a predefined temperature (T_{liquid}).

3. Method according to claim 2, wherein the temperature control means (11) are used to perform a renewal of the liquid in the enclosure (10), so as to automatically maintain a predefined volume of liquid (V) at a predefined temperature (T_{liquid}) in the enclosure (10).

4. Method according to any of the preceding claims, wherein the air injection means (12) comprise a tube (121) which is positioned inside the enclosure (10), which is connected to the air inlet opening (100), and which comprises an air outlet (121b) immersed in the volume of liquid and wherein each baffle (14, 14', 14") comprises a through-opening (140) for passage of the tube (121), and the tube (121) is passed through said through-opening (140) of each baffle (14, 14', 14"), whilst being in sealing engagement over its entire outer periphery with the baffle at each through-opening.

5. Method according to any of the preceding claims, wherein the air injection means (12) are used to introduce the airflow (F) entering the volume of liquid at a depth (H1) of between 20 mm and 80 mm.

6. Method according to any of the preceding claims, wherein the air injection means (12) comprise an air compressor (120) which is outside the enclosure (10) and the outlet of which can be or is connected to the air inlet opening (100) of the enclosure (10), or an air compressor (120) which is outside the enclosure (10) and the inlet of which can be or is connected to the air discharge opening (101) of the enclosure (10).

7. Method according to claim 6, wherein the air compressor (120) is used to heat the air passing through the air compressor at a temperature gradient ΔT of at least 2°C.

8. Method according to any of the preceding claims, wherein means (11) for controlling the temperature of the volume of liquid (V) are used to adjust the temperature of the volume of liquid contained in the enclosure (10) according to at least one predefined hygrometry setpoint (HR_{cons}) so as to automatically adjust the absolute humidity of said airflow (F') exiting the enclosure (10).

9. Method according to claim 8, wherein at least one humidity sensor (6) and the means (11) for controlling the temperature of the volume of liquid (V) are used to adjust the temperature of the volume of liquid contained in the enclosure (10) according to the humidity measured by the humidity sensor (6) and at least a predefined hygrometry setpoint (HR_{cons}).

10. Method according to any of the preceding claims, wherein the volume of liquid contained in the enclosure (10) of the device (1) is a volume of water.

11. Method according to claim 10, wherein the airflow (F) coming from outside the enclosure (10) and entering the enclosure (10) comprises particles and/or pollutants, and during which method at least some of these particles and/or pollutants are captured in the liquid contained in the enclosure (10).

12. Method for heating and/or cooling and/or humidifying and/or dehumidifying a site (2), wherein the method for producing an airflow (F') according to any of claims 1 to 10 is implemented such that the air that is introduced into the enclosure (10) of the device (1) is air from outside the site (2).

13. Method for heating or humidifying a site (2) according to claim 12, wherein a heat exchanger (3) connected to the enclosure (10) of the device (1) is also used, such that the heated air coming from the enclosure (10) crosses through said heat exchanger (3), before being introduced into the site (2), and wherein air recycling means (5) are used to supply the heat exchanger (3) with recycled air from inside the site (2), such that the air coming from the device (1) and crossing through the heat exchanger (3) is heated by said recycled air from inside the site (2).

14. Method according to claim 13, wherein an air heating device (4) interposed between the heat exchanger (3) and the inside of the site (2) is also used to preheat the air coming from the device (1) and crossing through the exchanger thermal (3) before its introduction into the site (2).

15. Method for cooling or dehumidifying a site (2), according to claim 12, wherein a heat exchanger (3') connected to the enclosure (10) of the device (1) is used, and wherein air recycling means (5) are used to supply the heat exchanger (3') with recycled air from inside the site (2), such that the air introduced into the enclosure (10) of the device (1) is cooled beforehand, by crossing through the heat exchanger (3'), by said recycled air from inside the site (2).

16. Use of the method according to any of claims 1 to 10 for heating a site or for cooling a site or for humidifying a site or for dehumidifying a site, and more particularly a site which is a greenhouse.
